# EUROPÄISCHE PATENTSCHRIFT

(11) **EP 1 561 631 B1**
(45) Veröffentlichungstag und Bekanntmachung des Hinweises auf die Patenterteilung: **19.03.2008**
(21) Anmeldenummer: 05001162.6
(22) Anmeldetag: 21.01.2005
(51) Int. Cl.: B60K 35/00

(54) **Kraftfahrzeug mit einer kombinierten Anzeige des Status mehrerer Fahrerunterstützungssysteme**
Motor vehicle including a combined indication of the status of multiple driver assistance systems
Automobile à affichage combiné de l'état d'une pluralité de systèmes d'assistance du conducteur

(30) Priorität: 06.02.2004 DE 102004005815
(43) Veröffentlichungstag der Anmeldung: 10.08.2005
(73) Patentinhaber: AUDI AG, 85045 Ingolstadt (DE)
(72) Erfinder: Hilpoltsteiner, Christian, 85309 Pörnbach (DE); Auerbach, Markus, 85055 Ingolstadt (DE); Popken, Markus, 85139 Wettstetten (DE); Weiss, Ulrich, 85092 Kösching (DE); Buschardt, Boris, Dr., 85049 Ingolstadt (DE); Mielich, Wolfgang, 85055 Ingolstadt (DE)
(74) Vertreter: Thielmann, Frank

(56) Entgegenhaltungen:
- DE-A1- 10 042 912
- DE-A1- 10 131 478
- DE-A1- 10 225 385
- DE-A1- 19 800 202
- DE-A1- 19 847 611

## Beschreibung

Die Erfindung betrifft ein Kraftfahrzeug umfassend mehrere ein- und ausschaltbare Systeme zur Unterstützung des Fahrers, insbesondere ein Spurhalte- und/oder Abstandshalte-System und/oder ein Spurwechselassistenzsystem, und eine Einrichtung zur kombinierten Anzeige des aktuellen Ein- oder Aus-Status der mehreren Systeme in einem einzigen entsprechend variierbaren optischen Kombinationssymbol, wobei die Einrichtung bei wenigstens einem eingeschalteten System zur Ermittlung wenigstens einer Information bezüglich des aktuellen Funktionsstatus des eingeschalteten Systems sowie zur Anzeige der wenigstens einen Information bezüglich des aktuellen Funktionsstatus in dem gegenüber der Anzeige des Ein- oder Aus-Status um wenigstens eine Darstellungsmöglichkeit zur Anzeige der Information bezüglich des Funktionsstatus erweiterten Kombinationssymbol ausgebildet ist.

Systeme zur Unterstützung des Fahrers, oft als "Fahrerassistenzsysteme" bezeichnet, beispielsweise Spurhalte-, Abstandshalte- und Spurwechselassistenzsysteme, finden eine immer weitere Verbreitung in Kraftfahrzeugen. Dabei hat es sich als zweckmäßig erwiesen, den Betriebsstatus "Ein" oder "Aus" bei einem Kraftfahrzeug, das über mehrere solche Systeme verfügt, in einem einzigen entsprechend variierbaren optischen Kombinationssymbol anzuzeigen. Der Fahrer erhält damit die Möglichkeit, den Betriebsstatus der mehreren Systeme auf einen Blick zu erfassen. Im Allgemeinen reicht es jedoch nicht aus, nur zu wissen, dass ein bestimmtes System zur Unterstützung des Fahrers eingeschaltet ist. Vielmehr möchte der Fahrer auch wissen, ob beispielsweise bei einem eingeschalteten Abstandshaltesystem ein vorausfahrendes Fahrzeug auch erfasst wurde oder ob ein Spurhaltesystem die gegenwärtig befahrene Spur erkannt hat. Solche Informationen können aber aus der bisherigen Anzeige des aktuellen Ein- oder Ausstatus der mehreren Systeme in einem optischen Kombinationssymbol nicht gewonnen werden.

Eine Anzeigevorrichtung für Fahrzeuge ist in DE 102 25 385 A1 beschrieben. Dabei soll eine Art Dreidimensionalität durch Einspiegeln eines "virtuellen Bildes" hinter ein "reales Bild" erreicht werden. Als Fahrerunterstützungssysteme sind ein Spurhaltesystem und ein Abstandshaltesystem vorgesehen. Dabei können der Betrieb der Systeme sowie diese kennzeichnende Informationen angezeigt werden, wobei das "virtuelle Bild" und das "reale Bild" kombiniert werden können.

Der Erfindung liegt daher das Problem zugrunde, ein Kraftfahrzeug mit den oben angegebenen Merkmalen anzugeben, das im Rahmen des kombinierten Anzeigekonzepts eine umfassendere und bessere Information des Fahrers erlaubt.

Zur Lösung dieses Problems ist bei einem Kraftfahrzeug der eingangs genannten Art erfindungsgemäß vorgesehen, dass die Einrichtung bei einem eingeschalteten Spurwechselassistenzsystem, über das ein sich schnell von hinten näherndes Fahrzeug auf der gleichen Spur und/oder links und/oder rechts des eigenen Fahrzeugs erfasst und der Fahrer gegebenenfalls gewarnt werden kann, zur Ermittlung wenigstens einer Information bezüglich des aktuellen Funktionsstatus des Spurwechselassistenzsystems sowie zur Anzeige dieser Information in dem um wenigstens eine Darstellungsmöglichkeit erweiterten Kombinationssymbol ausgebildet ist.

Durch die Erfindung wird es also möglich, dem Fahrer über das Kombinationssymbol Informationen zur Verfügung zu stellen, die weit über die Anzeige des Betriebsstatus hinausgehen können. Da erfindungsgemäß das kombinierte Anzeigekonzept konsequent beibehalten wird, ist kein zweiter Anzeigebereich, wie beispielsweise ein zweites Display, erforderlich, so dass der Fahrer auf einen Blick bzw. an einer Position sowohl den Betriebs- als auch den Funktionsstatus der Fahrerassistenzsysteme überprüfen kann. Ein Hin- und Herblicken zwischen verschiedenen Anzeigeflächen und somit eine Ablenkung des Fahrers vom eigentlichen Fahrgeschehen wird verhindert, während gleichzeitig die Vorteile der größeren intuitiven Verständlichkeit bei einer Darstellung in einem gemeinsamen Kombinationssymbol genutzt werden können.

Eine Spurwechselassistenzsystem hat die Funktion, ein sich schnell von hinten näherndes Fahrzeug auf der gleichen Spur und/oder links und/oder rechts des eigenen Fahrzeugs zu erfassen und den Fahrer gegebenenfalls zu warnen. Erfindungsgemäß ist bei einem eingeschalteten Spurwechselassistenzsystem vorgesehen, dass die Einrichtung zur kombinierten Anzeige zur Ermittlung wenigstens einer Information bezüglich des aktuellen Funktionsstatus des Spurwechselassistenzsystems sowie zur Anzeige dieser Information in dem um wenigstens eine Darstellungsmöglichkeit erweiterten Kombinationssymbol ausgebildet ist. Dabei ist es weiterhin sinnvoll, den Fahrerwunsch zu ermitteln und einen Vergleich durchzuführen, so dass eine Warnung, insbesondere über eine entsprechende Darstellung in dem Kombinationssymbol, nur erfolgt, wenn tatsächlich erkannt wird, dass der Fahrer beabsichtigt, beispielsweise bei einem sich schnell von links näherndes Fahrzeug auf die linke Spur zu wechseln. Damit die Systeme zur Unterstützung des Fahrers ordnungsgemäß arbeiten, ist es erforderlich, dass innerhalb dieser Systeme der aktuelle Funktionsstatus genau erkannt wird. Die Einrichtung zur kombinierten Anzeige muss dann lediglich diesen Funktionsstatus ermitteln, im einfachsten Fall die entsprechende Information übernehmen, so dass in der Anzeigeeinrichtung lediglich die entsprechende Ansteuerung des Kombinationssymbols implementiert sein muss. Alternativ ist es denkbar, dass eine solche Einrichtung weitere externe Informationen, die nicht vom Fahrerassistenzsystem geliefert werden, aufnimmt und verarbeitet, beispielsweise Wetterdaten, die zusätzlich in dem Kombinationssymbol dargestellt werden können. So kann der Fahrer beispielsweise auf einen Blick erfassen, wann erhöhte Aufmerksamkeit erforderlich ist, da widrige externe Bedingungen die Funktion eines Fahrerassistenzsystems beeinträchtigen können.

Ein Abstandshaltesystem ermöglicht eine automatische Regelung der eigenen Fahrzeuggeschwindigkeit und des Abstands zu einem erfassten vorausfahrenden Fahrzeug in Abhängigkeit von einer vom Fahrer gesetzten Wunschgeschwindigkeit und gegebenenfalls einem gewünschten Abstand zu dem vorausfahrenden Fahrzeug. In einer ersten Ausgestaltung der Erfindung ist entsprechend vorgesehen, dass die Einrichtung zur kombinierten Anzeige bei einem solchen eingeschalteten Abstandshaltesystem zur Ermittlung wenigstens einer Information bezüglich des aktuellen Funktionsstatus des Abstandshaltesystems sowie zur Anzeige dieser Information in dem um wenigstens eine Darstellungsmöglichkeit erweiterten Kombinationssymbol ausgebildet ist. Beispielsweise kann ermittelt und angezeigt werden, ob eine Wunschgeschwindigkeit gesetzt wurde bzw. wie hoch diese Geschwindigkeit ist, ob ein vorausfahrendes Fahrzeug erfasst wurde oder ob eine Situation vorliegt, in der eine automatische Regelung nicht möglich ist. Im letzteren Fall kann es sinnvoll sein, nicht nur eine Übernahmeaufforderung an den Fahrer im Kombinationssymbol auszugeben, sondern auch anzugeben, weshalb die automatische Regelung versagt. Natürlich ist es denkbar, dass zukünftige Abstandshaltesysteme um weitere Funktionalitäten erweitert werden. In diesem Fall ist es sinnvoll, wenn die Einrichtung zur kombinierten Anzeige auch zur Ermittlung und Anzeige dieser neuen Funktionsinformationen in dem entsprechend erweiterten Kombinationssymbol ausgebildet ist.

Weiterhin ist erfindungsgemäß vorgesehen, dass die Einrichtung zur kombinierten Anzeige bei einem eingeschalteten Spurhaltesystem, über das die aktuell befahrene Spur anhand der Fahrbahnmarkierungen und die vom Fahrer gewünschte Fahrtrichtung erkannt und verglichen werden und in Abhängigkeit des Vergleichsergebnisses gegebenenfalls eine Warnung vor dem Verlassen der Spur ausgegeben werden kann, zur Ermittlung wenigstens einer Information bezüglich des aktuellen Funktionsstatus des Spurhaltesystems sowie zur Anzeige dieser Information in dem um wenigstens eine Darstellungsmöglichkeit erweiterten Kombinationssymbol ausgebildet ist. Die gewünschte Fahrtrichtung wird dabei beispielsweise über die Lenkradstellung ermittelt. Außerdem kann ein Blinker gesetzt sein. Wenn der Fahrer nun beispielsweise eine erkannte Spur verlässt, indem er zu einem Überholvorgang ansetzt, dabei aber den Blinker nicht setzt, so kann in dem Kombinationssymbol eine Warnung ausgegeben werden. Ähnlich kann der Fahrer auf eine mögliche Übermüdung hingewiesen werden, wobei typischerweise eine erkannte Spur langsam mit unvermittelter Geschwindigkeit und ohne Blinker verlassen wird. Die zusätzlichen Darstellungsmöglichkeiten für die Funktionen lassen sich oft leicht im Kombinationssymbol realisieren. Eine erkannte Spur ist z.B. durch mehrere Segmentleuchten in einer Linie, die alle gleichzeitig aktiviert sind, darstellbar. Wenn jede zweite dieser Leuchten nicht leuchtet, so ergibt sich eine gestrichelte Linie, die symbolisieren kann, dass keine Spur erkannt wurde. Weitere Funktionalitäten, z.B. die Aufforderung einen nicht klar zuzuordnenden Spurwechsel als gewünscht zu bestätigen, können natürlich ebenfalls ermittelt und dargestellt werden.

In einer Ausgestaltung der Erfindung ist vorgesehen, dass die Einrichtung zur farbigen und/oder blinkenden Anzeige der wenigstens einen Information bezüglich des aktuellen Funktionsstatus in dem Kombinationssymbol ausgebildet ist. Dabei ist es insbesondere zweckmäßig, eine reibungslose Funktionalität durch eine grüne Farbe, mögliche Gefahren durch eine rote Anzeige zu symbolisieren. Ein Aufblinken, insbesondere mit veränderlichen Zeitintervallen, lenkt ebenfalls die Aufmerksamkeit des Fahrers auf das Kombinationssymbol, und führt so dazu, dass der Fahrer die Informationen über den Funktionsstatus überprüft. Außerdem ist es denkbar, dass die verschiedenen Systeme zur Unterstützung des Fahrers in dem Kombinationssymbol durch unterschiedliche Farbgebungen gegeneinander abgegrenzt werden. Dadurch kann die intuitive Erfassung der jeweiligen Bedeutung erleichtert werden.

Außerdem kann die Einrichtung zur Anzeige des eigenen Fahrzeugs in dem Kombinationssymbol aus der Hubschrauberperspektive oder mittels eines Cockpitdetails, insbesondere des Lenkrads, ausgebildet sein. Bei einer Anzeige aus der Hubschrauberperspektive ist dabei das eigene Fahrzeug von hinten oben aus der Rückposition zu erkennen. Eine solche Anzeige ermöglicht eine leicht verständliche Darstellung des Straßengeschehens in allen weiteren Richtungen, insbesondere auch des Geschehens hinter dem eigenen Fahrzeug. Bei einer Anzeige mittels eines Cockpitdetails wird der Fokus hingegen auf das Geschehen vor dem eigenen Fahrzeug gelenkt. Je nach Funktionalität der jeweiligen Fahrerassistenzsysteme können weitere Perspektiven, z.B. eine Draufsicht von oben oder eine schräge Ansicht des eigenen Fahrzeugs sinnvoll sein. Die Darstellung aus der Hubschrauberperspektive oder mittels eines Cockpitdetails dürften dabei besonders leicht verständlich sein.

In einer Ausgestaltung der Erfindung ist vorgesehen, dass die Einrichtung zur ergänzenden Anzeige von Warnhinweisen, insbesondere Gefahrenschildern, in dem Kombinationssymbol ausgebildet ist. Ein solcher Warnhinweis kann eine Gefahrensituation zusätzlich verdeutlichen, insbesondere bei einer Darstellung eines Schildes reagiert der Fahrer mit erhöhter Aufmerksamkeit. In schwierigen komplizierten Situationen kann es sinnvoll sein, einen Texthinweis auszugeben, der den Fahrer über ein Problem informiert, oder ihn zu einer bestimmten Handlung auffordert. Die Anzeige von Warnhinweisen kann natürlich wiederum farblich abgesetzt und/oder blinkend erfolgen.

Erfindungsgemäß ist außerdem vorgesehen, dass die Einrichtung zur Anzeige ein Display und/oder Segmentleuchten, insbesondere Segmentleuchten im Kombinationsgerät, umfasst. Die Anzeige im Kombinationsgerät, also im zentralen Anzeigefeld im Cockpit, hat den Vorteil, dass der Fahrer hier Veränderungen der Anzeige aufgrund der zentralen Positionierung sofort erkennt. Eine Segmentanzeige hat den Vorteil, dass sich die einzelnen Segmente separat überprüfen lassen und bei einem Funktionsausfall einzelner Segmente eine Warnung ausgegeben werden kann. Zudem sind Segmentanzeigen kostengünstig. Insbesondere dann, wenn bereits ein Display vorhanden ist, beispielsweise für ein Navigationssystem, kann aber auch eine Anzeige im Display sinnvoll sein. Dabei ist ein Flüssigkristalldisplay genauso denkbar wie ein Projektionsdisplay, wobei eine Projektion auf die Windschutzscheibe den Vorteil hat, dass der Fahrer den Blick nicht von der Fahrbahn abwenden muss.

Weiterhin kann die Einrichtung Mittel zur akustischen Darstellung der wenigstens einen Information bezüglich des aktuellen Funktionsstatus des oder der eingeschalteten Systeme umfassen. Dabei ist es möglich, gezielt unterschiedliche akustische Darstellungen der unterschiedlichen Funktionen zu wählen, die der Fahrer mit der Zeit intuitiv lernt, andererseits ist es zweckmäßig, in bestimmten Situationen möglichst eindringliche Warntöne auszugeben. Ein unerwünschtes Verlassen der Spur, das die Anzeigeeinrichtung über ein Spurhaltesystem ermittelt, kann beispielsweise auf den sogenannten "Sekundenschlaf" zurückzuführen sein. In diesem Fall nimmt der Fahrer eine mögliche nur optische Darstellung unter Umständen gar nicht wahr, sondern muss erst durch akustische Signale, seien es Töne oder eine Melodie, "aufgerüttelt" werden. Natürlich ist ebenso eine direkte Sprachausgabe, die die jeweilige Situation erklärt, denkbar.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipskizze eines erfindungsgemäßen Kraftfahrzeug,
- Fig. 2: eine Funktionsmatrix verschiedener Anzeigemöglichkeiten in dem Kombinationssystem für ein Abstandshalte- und ein Spurhaltesystem, und
- Fig. 3: eine Skizze einer Realisierung der Anzeige im Kombinationsgerät.

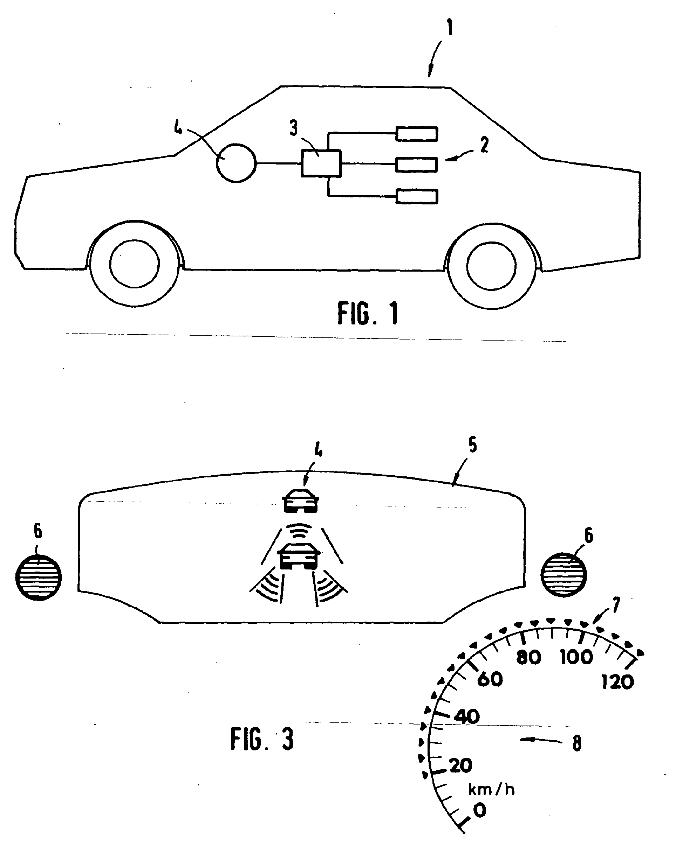

Fig. 1 zeigt in Form einer Prinzipskizze ein erfindungsgemäßes Kraftfahrzeug 1. Das Kraftfahrzeug 1 umfasst mehrere Systeme 2 zur Unterstützung des Fahrers, in der dargestellten Ausführungsform sind dies drei Systeme, nämlich ein Spurhalte-, ein Abstandshalte- und ein Spurwechselassistenzsystem. Diese Systeme sind mit der Einrichtung 3 verbunden, an die so Informationen über den Betriebs- und Funktionsstatus der Fahrerassistenzsysteme geliefert werden. Die Einrichtung 3 steuert die Anzeige im Kombinationssymbol 4. Natürlich können der Einrichtung 3 noch weitere Informationen, beispielsweise aus weiteren Fahrerassistenzsystemen oder andere externe Informationen, z.B. über Wetter- oder Straßenverhältnisse, zufließen. Im einfachsten Fall ist für jede eingehende Information eine bestimmte Darstellungsmöglichkeit in dem Kombinationssymbol 4 vorgesehen. Alternativ ist es denkbar, dass die Einrichtung 3 als Speicher- und/oder Recheneinheit ausgebildet ist, so dass zusätzlich eine Analyse und Auswertung eingehender Informationen möglich ist. Damit wird eine bessere Anpassung der Anzeige in dem Kombinationssymbol 4 an die aktuelle Situation ermöglicht, wenn beispielsweise die Informationen eines Spurhalte- und Spurwechselassistenzsystems kombiniert werden. Wenn z.B. eine erkannte Spur nach links verlassen wird und sich gleichzeitig schnell von links hinten ein Fahrzeug nähert, so liegt eine besonders gefährliche Situation vor, die eine schnelle und eindringliche Warnung des Fahrers erfordert. Dies kann durch eine entsprechende Auswertung in der Einrichtung 3 erkannt werden und sich in einer eindringlichen Darstellung im Kombinationssymbol 4, gegebenenfalls durch akustische Signale unterstützt, widerspiegeln. Das Kombinationssymbol 4 kann in einem Display, aber auch beispielsweise im Kombinationsgerät über Segmentleuchten dargestellt werden. Mit der gewählten Darstellungsform verändern sich entsprechend die Darstellungsmöglichkeiten und die Komplexität der Ansteuerung, die über die Einrichtung 3 erfolgt. Segmente lassen sich separat ansteuern, ein Segmentausfall ist leicht erkennbar und kann gegebenenfalls dem Fahrer signalisiert werden. Zudem sind Segmentanzeigen besonders überschaubar und in aller Regel entsprechend leicht verständlich. Das Kombinationsgerät liegt außerdem im zentralen Sichtbereich des Fahrers. Insbesondere bei komplizierteren Funktionalitäten oder, falls bereits ein Display im Kraftfahrzeug 1 vorhanden ist, kann es aber auch sinnvoll sein, das Kombinationssymbol 4 in ein Display zu integrieren.

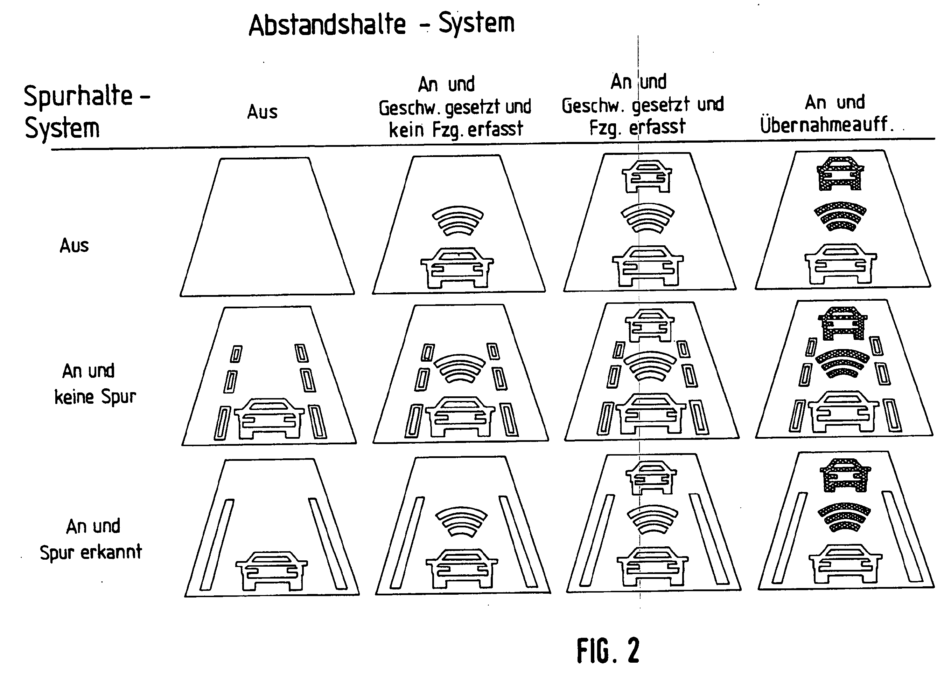

Fig. 2 zeigt eine Funktionsmatrix verschiedener Anzeigemöglichkeiten in dem Kombinationssymbol für ein Abstandshalte- und ein Spurhaltesystem. Wenn beide Systeme ausgeschaltet sind, wird nichts angezeigt. Ist nur das Abstandshaltesystem eingeschaltet, die Wunschgeschwindigkeit durch den Fahrer gesetzt und kein vorausfahrendes Fahrzeug erfasst worden, so wird das eigene Fahrzeug beispielsweise aus der Hubschrauberperspektive von hinten oben angezeigt, während nach vorne sich ausbreitende Radarwellen die Funktion des Abstandshaltesystems darstellen. Andere Darstellungsperspektiven, beispielsweise von oben oder aus der Sicht des Fahrers, sind ebenfalls denkbar. Wird ein vorausfahrendes Fahrzeug nun erfasst, so kann dies ebenfalls in dem Kombinationssymbol 4 in gleicher Art und Weise wie das eigene Fahrzeug, aber vor dem eigenen Fahrzeug dargestellt werden. In einer kritischen Situation, die eine Übernahmeaufforderung an den Fahrer nötig macht, können die Radarwellen oder das vorausfahrende Fahrzeug in einer Warnfarbe, z.B. in rot, dargestellt werden, zusätzlich ist ein Aufblinken oder eine Ausgabe eines akustischen Warntons oder Hinweises denkbar. Hat gleichzeitig das eingeschaltete Spurhaltesystem die gerade befahrene Spur nicht erkennen können, so werden links und rechts in dem Kombinationssymbol gestrichelte Linien dargestellt. Wird die Spur erkannt, so werden durchgezogene Linien dargestellt. Zur Unterscheidung zwischen den unterschiedlichen Systemen ist es möglich, ein vorausfahrendes Fahrzeug bzw. die Radarwellen des Abstandshaltesystems generell in einer anderen Farbe darzustellen als die Spuren des Spurhaltesystems. Bei einer vermuteten Gefahrensituation können natürlich auch die Spurlinien in einer Warnfarbe oder blinkend dargestellt werden. Ist außerdem noch ein in dieser Funktionsmatrix nicht aufgenommenes Spurwechselassistenzsystem eingeschaltet, so kann dies beispielsweise durch vom eigenen Fahrzeug nach hinten ausgehende Lichtwellen symbolisiert werden. Sich schnell von hinter nähernde Fahrzeuge können dann in dem Kombinationssymbol hinter dem eigenen Fahrzeug angezeigt werden. Hier nicht dargestellt sind mögliche zusätzliche Textausgaben, beispielsweise die gesetzte Wunschgeschwindigkeit bei einem Abstandshaltesystem oder der gewünschte Abstand zum vorausfahrenden Fahrzeug, sowie mögliche Warnschilder oder andere Warnhinweise. Weiterhin sind zahlreiche alternative Darstellungsmöglichkeiten der einzelnen Funktionalitäten denkbar, so könnte z.B. bei einem Spurhaltesystem eine gestrichelte Linie links und rechts des Fahrzeugs immer angezeigt werden, bei erkannter Spur könnte eine zusätzliche durchgezogene Linie parallel zu den vorhandenen Linien hinzukommen. Den Darstellungsmöglichkeiten sind hierbei nur durch die zweckmäßigerweise gegebene intuitive Verständlichkeit der dargestellten Funktionen Grenzen gesetzt.

Fig. 3 stellt eine Skizze einer Realisierung der Anzeige im Kombinationsgerät im zentralen Blickfeld des Fahrers hinter dem Lenkrad dar. Das eigene Fahrzeug ist wieder aus der Hubschrauberperspektive zu sehen, es gibt nach vorne ausgehende Radarwellen, durch die ein vorausfahrendes Fahrzeug, das ebenfalls dargestellt ist, erfasst wird. Außerdem sind eine erkannte Spur sowie nach hinten ausgehende Lichtwellen angezeigt. In diesem Fall sind somit sowohl das Spurhalte- als auch das Abstandshalte- und Spurwechselassistenzsystem eingeschaltet. Die Darstellung erfolgt über Segmentleuchten. Links und rechts des Kombinationsgeräts 5 sind Lautsprecher 6 zu sehen. Über die Lautsprecher 6, die von der Einrichtung 3 angesteuert werden oder Teil der Einrichtung 3 sind, ist eine akustische Darstellung der wenigstens einen Information bezüglich des aktuellen Funktionsstatus möglich. Hierzu können charakteristische Töne oder Melodien gewählt werden, ebenso ist eine direkte Sprachausgabe bei einem Abstandshaltesystem, z.B. die Ausgabe "vorausfahrendes Fahrzeug erkannt", möglich. Ein nicht erwünschtes Verlassen der Spur, z.B. bei einem kurzen Einnicken des Fahrers, kann durch einen eindringlichen Warnton, der über die Lautsprecher 6 ausgegeben wird, unterstrichen werden. Der Geschwindigkeitsbereich, in dem ein eingeschaltetes Abstandshaltesystem arbeitet, kann durch ein entsprechendes Leuchtband 7 am Tachometer 8 unterstrichen werden. Die gewählte Wunschgeschwindigkeit ist dann dabei farblich oder durch Blinken hervorgehoben. Die Realisierung der Anzeige im Kombinationsgerät 5 ist nur eine von vielen Möglichkeiten, z.B. kann über ein Head-up-Display ebenfalls eine zentrale Anzeige im Sichtbereich des Fahrers realisiert werden, bei der der Fahrer nicht einmal den Blick von der Fahrbahn wenden muss. Anzeigen des Kombinationssymbols in anderen Displays oder über Segmentleuchten in anderen Bereichen des Fahrzeuginnenraums sind ebenso denkbar.

## Patentansprüche

1. Kraftfahrzeug umfassend mehrere ein- und ausschaltbare Systeme zur Unterstützung des Fahrers, insbesondere ein Spurhalte- und/oder Abstandshalte-System, und eine Einrichtung zur kombinierten Anzeige des aktuellen Ein- oder Aus-Status der mehreren Systeme in einem einzigen entsprechend variierbaren optischen Kombinationssymbol, wobei die Einrichtung (3) bei wenigstens einem eingeschalteten System zur Ermittlung wenigstens einer Information bezüglich des aktuellen Funktionsstatus des eingeschalteten Systems sowie zur Anzeige der wenigstens einen Information bezüglich des aktuellen Funktionsstatus in dem gegenüber der Anzeige des Ein- oder Aus-Status um wenigstens eine Darstellungsmöglichkeit zur Anzeige der Information bezüglich des Funktionsstatus erweiterten Kombinationssymbol (4) ausgebildet ist.
**dadurch gekennzeichnet, dass** das Kraftfahrzeug ein Spurwechselassistenzsystem umfasst,
dass die Einrichtung (3) bei einem eingeschalteten Spurwechselassistenzsystem, über das ein sich schnell von hinten näherndes Fahrzeug auf der gleichen Spur und/oder links und/oder rechts des eigenen Fahrzeugs erfasst und der Fahrer gegebenenfalls gewarnt werden kann, zur Ermittlung wenigstens einer Information bezüglich des aktuellen Funktionsstatus des Spurwechselassistenzsystems sowie zur Anzeige dieser Information in dem um wenigstens eine Darstellungsmöglichkeit erweiterten Kombinationssymbol (4) ausgebildet ist.

2. Kraftfahrzeug nach Anspruch 1,
**dadurch gekennzeichnet,**
**dass** die Einrichtung (3) bei einem eingeschalteten Abstandshalte-System, über das die eigene Fahrzeuggeschwindigkeit und der Abstand zu einem erfassten vorausfahrenden Fahrzeug in Abhängigkeit von einer vom Fahrer gesetzten Wunschgeschwindigkeit und gegebenenfalls einem gewünschten Abstand zu dem vorausfahrenden Fahrzeug automatisch regelbar sind, zur Ermittlung wenigstens einer Information bezüglich des aktuellen Funktionsstatus des AbstandshalteSystems sowie zur Anzeige dieser Information in dem um wenigstens eine Darstellungsmöglichkeit erweiterten Kombinationssymbol (4) ausgebildet ist.

3. Kraftfahrzeug nach Anspruch 1 oder 2,
**dadurch gekennzeichnet,**
**dass** die Einrichtung (3) bei einem eingeschalteten Spurhalte-System, über das die aktuell befahrene Spur anhand der Fahrbahnmarkierungen und die vom Fahrer gewünschte Fahrtrichtung erkannt und verglichen werden und in Abhängigkeit des Vergleichsergebnisses gegebenenfalls eine Warnung vor dem Verlassen der Spur ausgegeben werden kann, zur Ermittlung wenigstens einer Information bezüglich des aktuellen Funktionsstatus des Spurhalte-Systems sowie zur Anzeige dieser Information in dem um wenigstens eine Darstellungsmöglichkeit erweiterten Kombinationssymbol (4) ausgebildet ist.

4. Kraftfahrzeug nach einem der vorangehenden Ansprüche,
**dadurch gekennzeichnet,**
**dass** die Einrichtung (3) zur farbigen und/oder blinkenden Anzeige der wenigstens einen Information bezüglich des aktuellen Funktionsstatus in dem Kombinationssymbol (4) ausgebildet ist.

5. Kraftfahrzeug nach einem der vorangehenden Ansprüche,
**dadurch gekennzeichnet,**
**dass** die Einrichtung (3) zur Anzeige des eigenen Fahrzeugs in dem Kombinationssymbol (4) aus der Hubschrauberperspektive oder mittels eines Cockpitdetails, insbesondere des Lenkrads, ausgebildet ist.

6. Kraftfahrzeug nach einem der vorangehenden Ansprüche,
**dadurch gekennzeichnet,**
**dass** die Einrichtung (3) zur ergänzenden Anzeige von Warnhinweisen, insbesondere Gefahrenschildern, in dem Kombinationssymbol (4) ausgebildet ist.

7. Kraftfahrzeug nach einem der vorangehenden Ansprüche,
**dadurch gekennzeichnet,**
**dass** die Einrichtung (3) zur Anzeige ein Display und/oder Segmentleuchten, insbesondere Segmentleuchten im Kombinationsgerät, umfasst.

8. Kraftfahrzeug nach einem der vorangehenden Ansprüche,
**dadurch gekennzeichnet,**
**dass** die Einrichtung (3) außerdem Mittel zur akustischen Darstellung der wenigstens einen Information bezüglich des aktuellen Funktionsstatus des oder der eingeschalteten Systeme umfasst.

## Claims

1. Motor vehicle comprising several driver assistance systems, which can be switched on and off, particularly a lane keeping and/or distance keeping system, and a device for combined indication of the current on or off status of several systems in a single combination symbol, which can be varied optically in the appropriate way, in which with at least one system switched on the device (3) is designed to ascertain at least one piece of information with reference to the current function status of the system switched on as well as to indicate at least this one piece of information with reference to the current function status in the combination symbol (4), which is extended with reference to the function status, by at least one illustrative possibility to indicate the information in respect of the indication of the on or off status,
**characterised in that** the motor vehicle comprises a lane change assistance system,
that with a lane change assistance system switched on, though which a vehicle approaching quickly from behind in the same lane and/or to the left and/or to the right of the vehicle itself can be detected and the driver can be warned if necessary, the device (3) is designed to ascertain at least one piece of information with reference to the current function status of the lane change assistance system as well as to indicate this information in the combination symbol (4), which is extended by at least one illustrative possibility.

2. Motor vehicle according to claim 1,
**characterised in that**
with a distance keeping system switched on, through which the speed of the vehicle itself and the distance from a vehicle detected driving in front of it can be adjusted automatically depending on a desired speed set by the driver and a desired distance from the vehicle driving in front of it if necessary, the device (3) is designed to ascertain at least one piece of information with reference to the current function status of the distance keeping system as well as to indicate this information in the combination symbol (4), which is extended by at least one illustrative possibility.

3. Motor vehicle according to claim 1 or 2,
**characterised in that**
with a lane keeping system switched on, through which the lane currently being driven in is recognised and compared using the road markings and the direction of travel desired by the driver and depending on the results of the comparison a warning can be given before the lane is left if necessary, the device (3) is designed to ascertain at least one piece of information with reference to the current function status of the lane keeping system as well as to indicate this information in the combination symbol (4), which is extended by at least one illustrative possibility.

4. Motor vehicle according to one of the previous claims,
**characterised in that**
the device (3) is designed for coloured and/or flashing indication of at least one piece of information with reference to the current function status in the combination symbol (4).

5. Motor vehicle according to one of the previous claims,
**characterised in that**
the device (3) is designed to indicate the vehicle itself in the combination symbol (4) from a helicopter type perspective or by means of a cockpit detail, particularly the steering wheel.

6. Motor vehicle according to one of the previous claims,
**characterised in that**
the device (3) is designed for additional indication of warning messages, particularly warning signs, in the combination symbol (4).

7. Motor vehicle according to one of the previous claims,
**characterised in that**
the device (3) for indication comprises a display and/or segment lights, particularly segment lights in the combination equipment.

8. Motor vehicle according to one of the previous claims,
**characterised in that**
the device (3) also comprises means for acoustic illustration of at least one piece of information with reference to the current function status of the system or systems switched on.

## Revendications

1. Véhicule automobile comprenant une pluralité de systèmes connectables et déconnectables d'assistance du conducteur, en particulier un système d'alerte de franchissement de ligne et/ou un système de maintien de distance, et un dispositif d'affichage combiné de l'état de marche ou d'arrêt actuel de la pluralité de systèmes en un seul symbole combiné optique variable en conséquence, le dispositif (3) étant réalisé dans le cas d'au moins un système en marche destiné à déterminer au moins une information relative à l'état de fonctionnement actuel du système en marche ainsi qu'à afficher l'au moins une information concernant l'état de fonctionnement actuel dans le symbole combiné (4) élargi d'au moins une possibilité de représentation pour l'affichage de l'information concernant l'état de fonctionnement par rapport à l'affichage de l'état de marche ou d'arrêt,
**caractérisé en ce que** le véhicule automobile comprend un système d'assistance de changement de voie,
**en ce que** le dispositif (3) est réalisé dans le cas d'un système d'assistance de changement de voie en marche, par le biais duquel un véhicule s'approchant rapidement de l'arrière sur la même voie et/ou à gauche et/ou à droite du propre véhicule peut être détecté et **en ce que** le conducteur peut être averti le cas échéant, permettant de déterminer au moins une information concernant l'état de fonctionnement actuel du système d'assistance de changement de voie ainsi que d'afficher cette information, dans le symbole combiné (4) élargi d'au moins une possibilité de représentation.

2. Véhicule automobile selon la revendication 1,
**caractérisé en ce**
**que** le dispositif (3) est réalisé dans le cas d'un système de maintien de distance en marche, par le biais duquel la vitesse propre du véhicule et la distance par rapport à un véhicule détecté devant lui sont réglables automatiquement en fonction d'une vitesse souhaitée fixée par le conducteur et le cas échéant d'une distance souhaitée par rapport au véhicule qui le précède, permettant de déterminer au moins une information concernant l'état de fonctionnement actuel du système de maintien de distance ainsi que d'afficher cette information, dans le symbole combiné (4) élargi d'au moins une possibilité de représentation.

3. Véhicule automobile selon la revendication 1 ou 2,
**caractérisé en ce**
**que** le dispositif (3) est réalisé dans le cas d'un système d'alerte de franchissement de ligne en marche, qui détecte et compare la voie actuellement parcourue à l'aide des marquages de voie et la direction souhaitée par le conducteur et permet le cas échéant d'émettre un avertissement avant le franchissement de la voie en fonction du résultat comparatif, permettant de déterminer au moins une information concernant l'état de fonctionnement actuel du système d'alerte de franchissement de ligne ainsi que d'afficher cette information dans le symbole combiné (4) élargi d'au moins une possibilité de représentation.

4. Véhicule automobile selon l'une quelconque des revendications précédentes,
**caractérisé en ce que**,
que le dispositif (3) d'affichage en couleur et/ou clignotant de l'au moins une information concernant l'état de fonctionnement actuel dans le symbole combiné (4) est réalisé.

5. Véhicule automobile selon l'une quelconque des revendications précédentes,
**caractérisé en ce**
**que** le dispositif (3) d'affichage du propre véhicule dans le symbole combiné (4) depuis la perspective d'hélicoptère ou au moyen d'un détail du cockpit, en particulier du volant est réalisé.

6. Véhicule automobile selon l'une quelconque des revendications précédentes,
**caractérisé en ce**
**que** le dispositif (3) d'affichage complémentaire d'avertissements, en particulier de panneaux de danger, dans le symbole combiné (4) est réalisé.

7. Véhicule automobile selon l'une quelconque des revendications précédentes,
**caractérisé en ce**
**que** le dispositif (3) d'affichage comprend un afficheur et/ou des segments lumineux, en particulier des segments lumineux dans l'appareil combiné.

8. Véhicule automobile selon l'une quelconque des revendications précédentes,
**caractérisé en ce**
**que** le dispositif (3) comprend en outre des moyens de représentation acoustique de l'au moins une information concernant l'état de fonctionnement actuel du ou des systèmes en marche.
